# EUROPEAN PATENT SPECIFICATION

(11) **EP 3 270 568 B1**
(45) Date of publication and mention of the grant of the patent: **12.12.2018**
(21) Application number: 16179256.9
(22) Date of filing: 13.07.2016
(51) Int. Cl.: H04L 29/08, G06Q 10/06

(54) **DYNAMIC SENSOR ARCHITECTURE**
DYNAMISCHE SENSORARCHITEKTUR
ARCHITECTURE DE CAPTEUR DYNAMIQUE

(43) Date of publication of application: 17.01.2018
(73) Proprietor: Bayerische Motoren Werke Aktiengesellschaft, 80809 München (DE)
(72) Inventor: Balagtas-Fernandez, Florence, 81543 München (DE); Grimm, Stev, 81673 München (DE); Marcial-Simon, Enrique, 97209 Veitshöchheim (DE)

(56) References cited:
- EP-A1- 2 082 933
- US-A1- 2011 196 571
- US-A1- 2014 343 830

## Description

The present invention is directed towards a method for dynamically providing a sensor control logic in a vehicle and towards a respective device. Furthermore, an arrangement comprising the device is suggested as well as a computer program providing instructions implementing the suggested method. Accordingly, the suggested teaching allows a dynamic adaption of control logic even at runtime.

The technical field of the present invention is generally the organization of control commands referring to sensor arrangements. According to the ongoing development of electronic control technologies and sensor control, a variety of advanced electronic control technologies are applied so that the vehicle has gradually become advanced and high-tech. To this end, in order to provide more improved stability, efficiency and comfort of traveling to a driver, the structure of the vehicle, such as a car, including sensor control has gradually become more complicated and intertwined.

According to a known method, a vehicle communication network between a conventional sensor and an electronic control unit may be established through a wired network inside a vehicle, such as a controller area network (CAN), a local interconnect network (LIN), a media oriented system transport or may be established through a wireless network such as Bluetooth.

US 2014/0343830 A1 shows a method or system for controlling a vehicle having auto stop and auto start functions and includes selectively inhibiting or disabling the auto stop or auto start functions in response to a detected vehicle position relative to an automatically learned vehicle route.

US 2015/0350750 A1 shows a vehicle wireless sensor network system, in which a plurality of vehicle wireless sensor nodes mounted in an arbitrary position of a vehicle may detect information about the vehicle, a vehicle base station may transmit information collected from each of the vehicle wireless sensor nodes to an electronic control unit (ECU) of the vehicle when the collected information is required for providing safety and convenience services of the vehicle.

US 2009/0312033 A1 teaches a data mashup service for various data types, including location dependent and mobility-aware data such as GPS location and surrounding maps. Other potential uses include business applications to track personnel, delivery vehicles and so forth.

Traditional algorithms, methods and systems for connecting to a data provider and data processors are hard coded and wired as software or hardware components.

Traditional algorithms, methods and systems for connecting to a data provider and data processors are hard coded and wired as software or hardware components. Hence, dynamically chosen different combinations of data providers at runtime or at startup are usually not possible.

There exist patterns for loosely coupled architectures e.g. based on service oriented architecture and OSGi.

Also known are service oriented architecture approaches which could also be adapted for functionality in vehicles. However, such approaches do not provide mechanisms for dynamically changing connections and service orchestrations in case that one service is not available anymore. So in case one data provider of the vehicle is failing or is not available, the systems are not able to dynamically optimize the algorithm based on what information is available. Specifically, such known methods are not tailored to the needs of automotive engineering.

In such a system the data providers' connections of different components, which may be implemented as hardware or software, are not accessible, and can therefore not be optimized and checked for cyclic dependency. Known methods merely provide static implementations in the domain of vehicle control logic.

Accordingly, it is an object of the present invention to provide a method and a control unit for allowing a dynamic gathering of sensor data, which is to be accomplished very fail-proof and under consideration of respective hardware conditions. It is also an object of the present invention to provide a respective computer program.

This object is solved by a method comprising the features of the independent claim 1. Further advantages and technical effects are provided by the dependent claims.

Accordingly, a method for dynamically providing a sensor control logic in a vehicle is suggested, comprising the steps of providing a set of sensors being arranged in at least one vehicle for outputting raw data items and storing control instructions being arranged to provide vehicle information by connecting sensor outputs, wherein the control instructions are dynamically selected at runtime. The control instructions may in practice comprise several further instructions for implementing the required functionality. Hence, the control instruction may also be referred to as a functional unit.

A sensor control logic is to be understood as any instruction set may it be software or hardware such as circuitry implementing the instructions for connecting sensors. The control logic is provided to read out the sensors according to a specific pattern. Hence, sensor control comprises not only active reading out the sensor data but refers to the selection of specific sensors for a task to be accomplished. Such a task is to provide specific information, for instance a driver information. In case information is required for operating components of the vehicle sensors are selected, which each on its own or jointly provide the required information. A sensor is any commonly known sensor, which is addressed in an advantageous way according to the present invention.

Those sensors are arranged in at least one vehicle meaning that they can either be applied in a car, in several cars being connectively coupled or even in further devices. For instance, a sensor being provided by a mobile device of the driver can be used as well. For instance, an acceleration sensor of a smart phone can be read out as well. Hence, the sensor of the smart phone is carried in the vehicle resulting in a lose coupling of the sensor being arranged in the vehicle. Accordingly said sensor can be detachably arranged at or in the vehicle. It is also possible to use a variety of sensors being part of cars and smart phones, which provide their data for making decisions regarding the selection of instructions as well as for obtaining vehicle information.

The outputting of raw data items is accomplished by reading out the sensors. Raw data means that merely sensor data is provided which is not yet further processed or interpreted. These data items may contain measurement values or small data sets. Typically, numerical values are obtainable which can then be connected towards a specific information being then used as vehicle information.

For connection raw data items towards vehicle information control instructions are used. These instructions can be obtained from a data storage providing several instructions. For instance, a table may provide information indication which sensors are required for obtaining a specific vehicle information. A vehicle information may comprise information about a specific driving speed, status of components or the driver's behavior. For instance, sensor data can be interpreted such that the vehicle information describes parameters of the measured driving style. Vehicle information may relate values of the brakes and acceleration measurements towards the information that the driver has a rather rapid driving style. The vehicle information thereby allows drawing conclusions towards the driver.

The sensor data is connected according to instructions being dynamically selected at runtime. Runtime means the time between the motor, or at least the assistance system, is turned on and off. Hence, at runtime describes that these instructions are not hard coded but may be selected according to a specific situation occurring for instance while driving. Not hard coded means that these instructions can easily be exchanged with one another and the most appropriate instruction is selected.

These instructions may provide an indication which sensors are to be connected, which means jointly interpreted, for reaching to a specific vehicle information. The sensor data itself can be used for deciding which instruction is the most appropriate for connection sensors. It may be the case that different sets of sensors may be read out for obtaining a specific information. A first instruction connecting a first set of sensors can then be exchanged by a second instruction connecting a second set of sensors. Accordingly, different logics can be dynamically implemented for gathering the required information.

According to an aspect of the present invention the step of selecting the control instruction is performed as a function of at least one outputted raw data item. This provides the advantage that in case some sensors are not available and therefore do not provide raw data items as intended a further logic can be applied involving different sensors.

According to a further aspect of the present invention connecting sensor outputs is performed as a function of stored connection rules. This provides the advantage that the connection rules can be tested a priori and can then be applied for connecting sensors. The rules may comprise ranges or values, which are connected by a condition leading to vehicle information. Such a rule may be that in case specific sensors indicate humidity it is raining. If different sensors indicate humidity the car is traveling on wet roads.

According to a further aspect of the present invention connecting sensor outputs is performed as a function of wirelessly received connection rules. This provides the advantage that a central component, such as a server, may provide the instructions. Furthermore, the rules can be provided jointly by several cars over a telecommunications interface.

According to a further aspect of the present invention outputted raw data items are collected from sensors being arranged in different vehicles. This provides the advantage that cars are communicatively connected interchanging sensor data, which can be interpreted using a larger image of the present situation.

According to a further aspect of the present invention outputting raw data is accomplished using sensors of different devices. This provides the advantage that sensors of mobile phones, cars and further more can be used.

According to a further aspect of the present invention sensors of different devices are accessed for selecting the control instructions. This provides the advantage that an abstraction layer can be implemented across several devices. Furthermore, different devices can jointly decide which rules to apply.

The object is also solved by a control device for dynamically providing a sensor control logic in a vehicle, comprising a set of sensors being arranged in the vehicle for outputting raw data items and a memory for storing control instructions being arranged to provide vehicle information by connecting sensor outputs, wherein the control device is arranged to dynamically select the control instruction at runtime.

The object is also solved by a sensor control arrangement comprising the aforementioned control device and a further mobile device, which are communicatively coupled with each other for exchanging raw data items.

The object is also solved by a computer program comprising instructions for implementing the method according to any of the described aspects, when executed on a computer.

It is of special advantage that the method as suggested above can be executed using structural features of the suggested device and control unit. Accordingly, the method teaches steps which are arranged to operate the suggested device. Furthermore, the device comprises structural features allowing the accomplishment of the suggested method. In addition, a computer program and a computer program product respectively is suggested comprising instruction which perform the suggested method when executed on a computer or the device according to the present invention. Furthermore, the instructions provide means for implementing the structural features of the claimed device. Accordingly, an operable image of the structural features of the device can be created. Likewise, an arrangement comprising the structural device features is provided.

The invention will now be described merely by way of illustration with reference to the accompanying drawings:
- Figure 1: shows a schematic block diagram of a Mashup network according to an aspect of the present invention;
- Figure 2: shows a block diagram demonstrating the instructions for connecting sensors according to an aspect of the present invention; and
- Figure 3: shows an architecture of the control arrangement according to an aspect of the present invention.

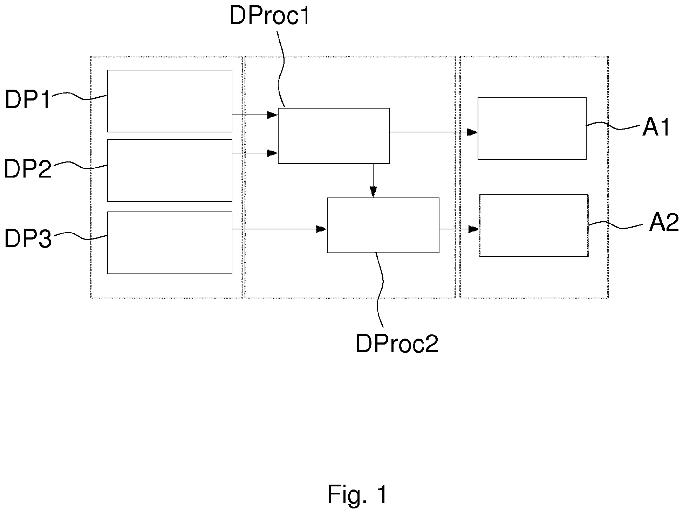

Figure 1 shows a schematic block diagram of a Mashup network which serves as an application scenario of the present invention. According to an aspect of the present invention on the left hand side sensors as data providers are depicted, in the middle the instructions are shown and on the right hand side the resulting vehicle information is demonstrated.

The sensors on the right hand side may also be referred to as data providers and are therefore assigned the reference signs DP1, DP2 and DP3. The instructions in the middle connect the data processors DP1, DP2 and DP3. Accordingly, these instructions are named data processors DProc1 and DProc2. The resulting vehicle information can be used by further applications A1 and A2

For providing a specific information such as vehicle information, a variety of sensor data is read out for retrieving the respective raw data. For doing so, a so-called Mashup network is suggested. Each sensor DP1, DP2 and DP3 is for instance named data provider. The general goal is to provide information such as the application or User function information. The sensors or generally data providers which can be remotely arranged, need not to be implemented in one single car, although this might be the typical case. It may be of advantage to distribute the sensors among several cars and even use sensors of further devices. Such a further device may for instance be a smart phone or in general a mobile device. The sensors DP1, DP2 and DP3 may be arranged to directly or indirectly communicate with each other. In this fashion widely spread sensors can be read out for obtaining larger amounts of raw data.

The architecture as being shown in figure 1 can be implemented using at least one car, wherein also further devices, such as a server, may be applied. Accordingly, abstract layers can be implemented and deployed across several hardware platforms. The Data Processors DProc1, DProc2 can be handled in the same way according to an aspect of the present invention like sensors themselves, as the Data Processors deliver data items as well. While the sensors DP1, DP2 and DP3 measure data the Data Processors connect the gathered data and deliver composed data.

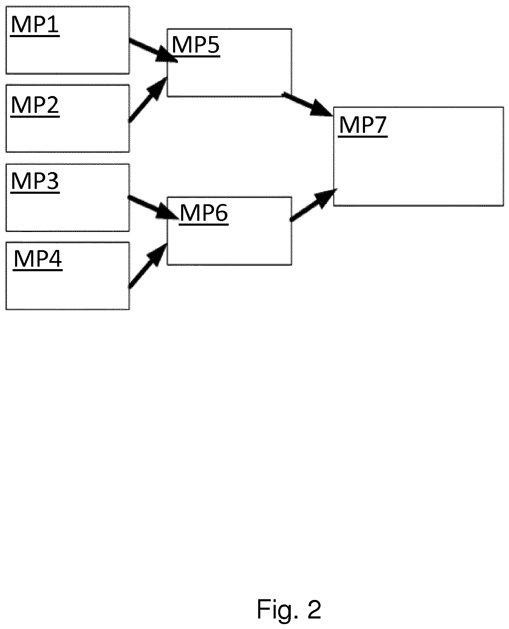

Figure 2 shows a block diagram demonstrating the instructions MP1-MP7 for connecting sensors DP1, DP2 and DP3 and explains a Mashup network as one aspect of the present invention. According to an aspect on the left hand side sensors are depicted in the middle the instructions for connecting sensors are shown and on the right hand side the resulting vehicle information is demonstrated. A data processor may be referred to as sensor merely according to an aspect of the present invention. The Mashup Processors can for instance be named as follows:
MP1: Mileage Mashup Processor
MP2: Steer Angle Mashup Processor
MP3: GeoRegion Mashup Processor
MP4: Road Type Mashup Processor
MP5: Curviness Mashup Processor
MP6: Spee Limits Mashup Processor
MP7: Set Point Speed Mashup Processor

For example, traffic jam detection is done by comparing an expected speed to the current speed. The setpoint speed is calculated by a set of algorithms. Each of those algorithms bases on things like weather conditions, road conditions or country. For the sake of extensibility, the overall traffic detection algorithm must not be hard-coded to just use the mentioned setpoint speed elements; it shall rather be an extensible architecture. For example, in future one might want to additionally consider aspects of the driver's personality (e.g. tends to speed-up before traffic lights) to calculate the setpoint speed. Another important thing to consider is that the setpoint speed algorithm elements may also be of use to other applets A1, A2 and therefore must not be designed such that they are only usable in the traffic context.

This requirement is achievable by splitting the overall algorithm into tiny parts, each with a distinct function. Each of those parts is encapsulated in an own class. All those classes follow the same interface. The overall algorithm is finally composed by interconnecting those classes again in a plug-and-play fashion or automatically.

This approach results in a 'network' of classes that can connect to one another and use each other's outputs to do calculations in order to achieve higher-value information. Such behavior is called 'Mashup; therefore, those individual classes can be named Mashup Processors DProc1, DProc2.

For example, in case there is a class that calculates the precipitation condition. It's got a set of inputs (wiper activity, rain sensor, thermo-meter, and further more) and one or more semantically similar outputs, such as rain strength, snow, ... This class interface has got no Traffic specifics and can therefore easily be reused elsewhere.

For that reason, a framework has been developed which provides the possibility to connect system components to each other in such a way that the previously mentioned problem is solved, among other aspects.

In such systems it is possible to detect cyclic dependencies or "overweighted" information. That is possible due to the easy analyzability of a Mashup network. The same would be desirable for "traditional" algorithms, but is not possible because ordinary source code is not as formal and cannot be analyzed that easily.

Data providers are components which provide a certain type of raw data. Data processors are consuming information from data provider DP1, DP2 and DP3, but also other data processors and generate new information. The new information can be an alternative source for another data processor DProc1, DProc2, e.g. in case of failure. But, it can also be completely new kind of data. Data processors DProc1, DProc2 are also called Mashup processors.

There can be more than two different types of data providers DP1, DP2 and DP3. One just has to implement an interface that gets information from these data providers and feed them to the mashup network. Such types of data providers coming from a direct source may be called 'Raw data provider'. In principle Mashup processors MP1-MP7 are all "data providers" within the Mashup network. A Mashup processor can have multiple configurations based on the inputs provided. Two types of configurations are possible:

One that gets information directly from the 'most reliable' source (e.g. provided by the data provider) and passes it to the Mashup network as output. For example, the processor receives / senses the data / information directly e.g. via CAN-Bus, can directly forward this information and is usually the most trustful source.

The second one is based on combined/derived data (this data can be from other Mashup processors MP1-MP7 or from some direct source implemented by the data provider) and processed within the Mashup processor to provide new information

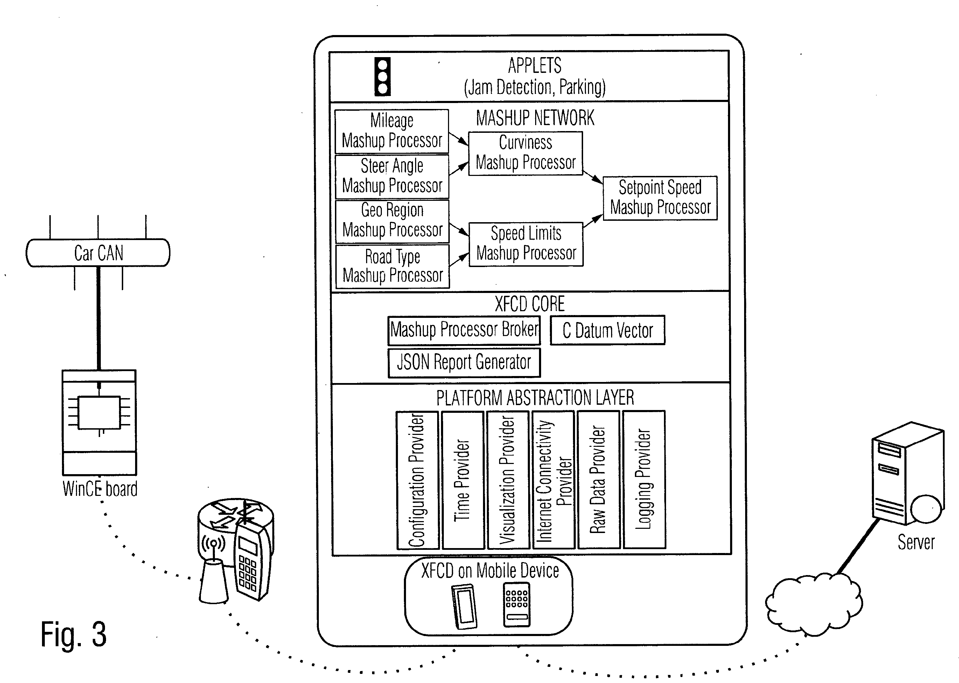

Figure 3 shows an exemplary architecture according to an aspect of the present invention. A system with the framework is designed in such a way the connections of data providers DP1, DP2 and DP3 and data processors DProc1, DProc2 (processing the input from data providers and other processors) are managed, evaluated and reorganized, decentralized or centralized by kind of mastermind. This is the Mashup broker. Furthermore, the data processors can be connected to each other. This is done in such a way that:
- A mastermind exists which knows all the available data providers as well as Mashup Processors and creates the "soft" connections. The mastermind is responsible for organization and is called Mashup Processor Broker.
- In case of decentralized organization e.g. one or more Mashup Processors could act as a kind of "sub" Mashup network and provide connection information to other Mashup Processors and sub Mashup networks, so that the organization becomes decentralized. A "sub" Mashup network could also provide connection information to a mastermind, so that we get actually a kind of hierarchical design, like it is known from computer science as tree topology network.

The decentralized approach is as follows. This way the system is built in such a way that it is very easy to evaluate the availability of sources and the need for reorganization the data providers with data processor DProc1, DProc2. A system is designed such a way that the data providers and processors with certain output can be located and run on dedicated ECUs in the car as well as on a smart device (phone, glasses, watch, ...) or on a computer or any server.

In order to run the application (e.g. on a CE device), the necessary components on the 'platform abstraction layer' (see Fig. 3) should be implemented. The most important one is the raw data provider since it is the one that drives the mashup network.

According to the invention the application data can be directly derived by a source or indirectly by smart combinations of different sources, which might be provided by different hardware components within a vehicle as well as outside a vehicle, which provide data.

Depending on the availability (e.g. detected by timeout), quality aspects of the data providers and other factors like current driving situation, the "sub" Mashup networks / mastermind triggers a reorganization of the Mashup network, thus provide dynamical optimization. There might be several modes which are taken into account to decide whether a Mashup network reorganization may be triggered. In the (safe) mode 1, a reorganized Mashup network may just be applied at startup. In mode 2, a reorganized Mashup network may just be applied as soon as the vehicle is stopped.

In order to provide higher safety level, some functionality of the car is just available as soon as the (re-) organization has successfully finished. E.g. the vehicle does not react on certain driver interactions like "accelerate" or anything like that.

In case that a path from required data provider up to the last processor cannot be built, the system can indicate that as a failure, so that the user or other components get informed. E.g. a server also gets informed or in worst case also SOS- or Concierge-Service, etc. gets informed.

For fast improvement and optimization a local optima could be searched within a "sub" Mashup network or autonomously by Mashup Processor or composite Data Provider. This way a local optimum could be found pretty fast and global optimum is then applied later. E.g. Mashup processors DProc1, DProc2 or sub network could or mastermind could broadcast known data providers DP1, DP2 and DP3 and data processors for certain type of data. This way, all data providers DP1, DP2 and DP3 and data processors share the same information and can directly switch connection in case of missing data. This is similar to exchanging routing information proactively or reactively based on strategies like AODV, LSR, etc. known from network science. E.g. a certain type of information could be reflected with a (domain) name, which is available on different addresses (connections), of course also with different qualities, e.g. delay times, trust value, etc.

E.g. local GeoRegion Processor and therefore also the "Speed Limits" Processor fail. As a first approach the vehicle could just use the "Speed Limits" Processor provided by the smart phone. This is the information could be applied right away as the vehicle knows its existence. Furthermore, the vehicle could exchange information about other (more low level data providers) with the Smart phone and exchange the current quality / signal length of the smart phone's source providers. Then the vehicle might choose e.g. the remote GeoRegion Processor to be combined with the local Road Type Processor. E.g. the local Road Type Processor might provide higher quality of data, etc.. Then the vehicle has achieved a global optimization.

A reorganized Mashup network could also be computed at runtime in parallel, so instances might be existing twice, but one is live and the other one is in construction / test mode. As soon as alternative / Mashup network is complete, verified, etc., a hand-over is triggered. This way it is ensured that availability of working Mashup Network is always given.

## Claims

1. A method for dynamically providing a sensor control logic in a vehicle, comprising the steps of:
- providing a set of sensors being arranged in at least one vehicle for outputting raw data items; and
- storing control instructions being arranged to provide vehicle information by connecting sensor outputs, **characterized in that** the method is further comprising the steps of:
- dynamically selecting at runtime one control instruction for providing a requested vehicle information, wherein runtime is a time between an assistance system of the vehicle is turned on and off, and
- connecting sensor outputs to provide the vehicle information as a function of wirelessly received connection rules, wherein the rules are provided jointly by several cars over a telecommunications interface.

2. The method according to claim 1, **characterized in that** the step of selecting the control instruction is performed as a function of at least one outputted raw data item.

3. The method according to claim 1 or 2, **characterized in that** connecting sensor outputs is performed as a function of stored connection rules.

4. The method according to any one of the preceding claims, **characterized in that** outputted raw data items are collected from sensors being arranged in different vehicles.

5. The method according to any one of the preceding claims, **characterized in that** outputting raw data is accomplished using sensors of different devices.

6. The method according to any one of the preceding claims, **characterized in that** sensors of different devices are accessed for selecting the control instructions.

7. A control device for dynamically providing a sensor control logic in a vehicle, comprising:
- a set of sensors being arranged in the vehicle for outputting raw data items; and
- a memory for storing control instructions being arranged to provide vehicle information by connecting sensor outputs, **characterized in that** the control device is arranged to dynamically select the control instruction at runtime for providing a requested vehicle information,
wherein runtime is a time between an assistance system of the vehicle is turned on and off, and
said control device is further arranged to connect sensor outputs to provide the vehicle information as a function of wirelessly received connection rules, wherein the rules are provided jointly by several cars over a telecommunications interface.

8. A sensor control arrangement comprising the control device according to claim 7 and a further mobile device, which are communicatively coupled with each other for exchanging raw data item.

9. A computer program comprising instructions for implementing the method of any one of claims 1 to 6 when executed on a computer.

## Patentansprüche

1. Verfahren zum dynamischen Bereitstellen einer Sensorsteuerlogik in einem Fahrzeug, das die folgenden Schritte umfasst:
- Bereitstellen eines Satzes Sensoren, der in mindestens einem Fahrzeug zum Ausgeben von Rohdateneinheiten angeordnet ist; und
- Speichern von Steuerbefehlen, die angeordnet sind, um Fahrzeuginformationen durch Verbinden von Sensorausgaben bereitzustellen, **dadurch gekennzeichnet, dass** das Verfahren ferner die folgenden Schritte umfasst:
- dynamisches Auswählen bei Laufzeit eines Steuerbefehls zum Bereitstellen angeforderter Fahrzeuginformationen, wobei die Laufzeit eine Zeit zwischen dem Ein- und Ausschalten eines Assistenzsystems des Fahrzeugs ist, und
- Verbinden von Sensorausgaben, um die Fahrzeuginformationen in Abhängigkeit von drahtlos empfangenen Verbindungsregeln bereitzustellen,
wobei die Regeln über eine Telekommunikationsschnittstelle von mehreren Autos gemeinsam bereitgestellt werden.

2. Verfahren nach Anspruch 1, **dadurch gekennzeichnet, dass** der Schritt des Auswählens des Steuerbefehls in Abhängigkeit von mindestens einer ausgegebenen Rohdateneinheit durchgeführt wird.

3. Verfahren nach Anspruch 1 oder 2, **dadurch gekennzeichnet, dass** das Verbinden von Sensorausgaben in Abhängigkeit von gespeicherten Verbindungsregeln durchgeführt wird.

4. Verfahren nach einem der vorhergehenden Ansprüche, **dadurch gekennzeichnet, dass** ausgegebene Rohdateneinheiten von Sensoren gesammelt werden, die in verschiedenen Fahrzeugen angeordnet sind.

5. Verfahren nach einem der vorhergehenden Ansprüche, **dadurch gekennzeichnet, dass** das Ausgeben von Rohdaten unter Verwendung von Sensoren verschiedener Vorrichtungen erreicht wird.

6. Verfahren nach einem der vorhergehenden Ansprüche, **dadurch gekennzeichnet, dass** auf Sensoren verschiedener Vorrichtungen zugegriffen wird, um die Steuerbefehle auszuwählen.

7. Steuervorrichtung zum dynamischen Bereitstellen einer Sensorsteuerlogik in einem Fahrzeug, umfassend:
- einen Satz Sensoren, der in dem Fahrzeug zum Ausgeben von Rohdateneinheiten angeordnet ist; und
- einen Speicher zum Speichern von Steuerbefehlen, die angeordnet sind, um Fahrzeuginformationen durch Verbinden von Sensorausgaben bereitzustellen, **dadurch gekennzeichnet, dass** die Steuervorrichtung angeordnet ist, um den Steuerbefehl bei Laufzeit zum Bereitstellen angeforderter Fahrzeuginformationen dynamisch auszuwählen, wobei die Laufzeit eine Zeit zwischen dem Ein- und Ausschalten eines Assistenzsystems des Fahrzeugs ist, und
die Steuervorrichtung ferner angeordnet ist, um Sensorausgaben zu verbinden, um die Fahrzeuginformationen in Abhängigkeit von drahtlos empfangenen Verbindungsregeln bereitzustellen, wobei die Regeln über eine Telekommunikationsschnittstelle von mehreren Autos gemeinsam bereitgestellt werden.

8. Sensorsteueranordnung, die die Steuervorrichtung nach Anspruch 7 und eine weitere Mobilvorrichtung umfasst, die kommunikativ miteinander zum Austauschen von Rohdateneinheiten gekoppelt sind.

9. Computerprogramm, das Befehle zum Implementieren des Verfahrens nach einem der Ansprüche 1 bis 6 umfasst, wenn es auf einem Computer ausgeführt wird.

## Revendications

1. Procédé pour fournir de manière dynamique une logique de commande de capteurs dans un véhicule comprenant les étapes consistant à :
- fournir un jeu de capteurs en les disposant dans au moins un véhicule pour fournir en sortie, des éléments de données brutes, et
- enregistrer des instructions de commande organisées pour fournir une information de véhicule en connectant les sorties de capteur,
procédé **caractérisé en ce qu'**il comprenant en outre les étapes consistant à :
- sélectionner de manière dynamique le temps de fonctionnement d'une instruction de commande, pour fournir une information demandée par le véhicule, le temps de fonctionnement étant le temps compris entre la mise en marche d'un système d'assistance du véhicule et son arrêt, et
- connecter les sorties de capteur pour fournir une information du véhicule, comme fonction de règles de connexion reçues par une liaison sans fil selon laquelle les règles sont fournies en commun par plusieurs véhicules par une interface de télécommunication.

2. Procédé selon la revendication 1,
**caractérisé en ce que**
l'étape de sélection de l'instruction de commande est faite en fonction d'au moins un élément de données brutes fourni en sortie.

3. Procédé selon la revendication 1 ou 2,
**caractérisé en ce que**
la connexion des sorties de connecteur se fait en fonction des règles de connexion enregistrées.

4. Procédé selon l'une quelconque des revendications précédentes,
**caractérisé en ce que**
les éléments de données brutes fournies en sortie sont collectés par des capteurs répartis dans différents véhicules.

5. Procédé selon l'une quelconque des revendications précédentes,
**caractérisé en ce que**
les données brutes fournies en sortie résultent de l'utilisation de capteurs de différents dispositifs.

6. Procédé selon l'une quelconque des revendications précédentes,
**caractérisé en ce qu'**
on accède à des capteurs de différents dispositifs pour sélectionner les instructions de commande.

7. Dispositif de commande pour fournir de manière dynamique une logique de commande de capteurs à un véhicule comprenant :
- un jeu de capteurs répartis dans le véhicule pour fournir en sortie des éléments de données brutes, et
- une mémoire pour enregistrer les instructions de commande organisées pour fournir l'information de véhicule en connectant les sorties de capteur,
**caractérisé en ce que**
- le dispositif de commande est organisé pour sélectionner de manière dynamique les instructions de commande pour un temps de fonctionnement pour fournir l'information de véhicule demandée,
- dans lequel le temps de commande est le temps compris entre la mise en marche du système d'assistance du véhicule et son arrêt, et
- le dispositif de commande est en outre organisé pour relier les sorties de capteur et fournir l'information du véhicule en fonction de règles de connexion transmises par une liaison sans fil,
- les règles étant fournies en commun par plusieurs véhicules par une interface de télécommunication.

8. Ensemble de capteurs comprenant un dispositif de commande selon la revendication 7, et un dispositif mobile qui sont couplés de façon à communiquer l'un avec l'autre pour échanger un élément de données brutes.

9. Programme d'ordinateur comportant les instructions pour appliquer le procédé selon l'une quelconque des revendications 1 à 6, lorsque le programme est exécuté par un ordinateur.
